# EUROPEAN PATENT APPLICATION

(11) **EP 4 304 288 A1**
(43) Date of publication of application: **10.01.2024**
(21) Application number: 22778398.2
(22) Date of filing: 21.02.2022
(51) Int. Cl.: H04W 76/10, H04W 24/02

(54) **COMMUNICATION METHOD, COMMUNICATION APPARATUS, AND BASE STATION**

(30) Priority: 29.03.2021 CN 202110334803
(71) Applicant: Huawei Technologies Co., Ltd., Shenzhen, Guangdong 518129 (CN)
(72) Inventor: GUO, Chengxu, Shenzhen, Guangdong 518129 (CN); MA, Ning, Shenzhen, Guangdong 518129 (CN)
(74) Representative: Pfenning, Meinig & Partner mbB
(86) International application number: PCT/CN2022/077083
(87) International publication number: WO 2022/206213

(57) **Abstract**

This application provides a communication method, a communication apparatus, and a base station. The method includes: obtaining channel information from one or more of a baseband processing unit, an RRU, or an AAU; and establishing a channel between a base station and a network management device based on the channel information, where the base station includes one or more of the baseband processing unit, the RRU, or the AAU. According to this solution, the channel information may be automatically obtained from one or more of the baseband processing unit, the RRU, or the AAU, and the channel between the base station and the network management device is automatically established based on the channel information, so that deployment costs and time required for deployment can be reduced.

## Description

### CROSS-REFERENCE TO RELATED APPLICATIONS

This application claims priority to Chinese Patent Application No. 202110334803.0, filed with the China National Intellectual Property Administration on March 29, 2021 and entitled "COMMUNICATION METHOD, COMMUNICATION APPARATUS, AND BASE STATION", which is incorporated herein by reference in its entirety.

### TECHNICAL FIELD

This application relates to the field of wireless communication technologies, and in particular, to a communication method, a communication apparatus, and a base station.

### BACKGROUND

In a distributed base station, a conventional macro base station device is divided, according to functions, into two functional units: a base band unit (Base Band Unit, BBU) and a remote radio unit (Remote Radio Unit, RRU).

Currently, when a main control board in the distributed base station needs to be replaced, a hardware installation engineer usually needs to bring a new main control board to an equipment room where the BBU is located, first removes the old main control board (for example, a faulty main control board or an unqualified main control board), then installs the new main control board, and carries out hardware commissioning-related operations. In addition, a software installation engineer (also referred to as a deployment engineer) needs to carry a deployment device, such as a portable terminal or an intelligent terminal, to the equipment room where the BBU is located to complete deployment operations. It can be learned that, in the conventional technology, the deployment has high labor costs, time-consuming, and has a complex deployment process.

### SUMMARY

In view of this, this application provides a communication method, a communication apparatus, and a base station, so that deployment costs and time required for deployment can be reduced.

According to a first aspect, an embodiment of this application provides a communication method. The method may be performed by a base station, a BBU in a base station, a main control board in a base station, or a module (for example, a chip) in a base station. The method includes: obtaining channel information from one or more of a baseband processing unit, an RRU, or an AAU; and establishing a channel between a base station and a network management device based on the channel information, where the base station includes one or more of the baseband processing unit, the RRU, or the AAU.

According to this solution, the channel information may be automatically obtained from one or more of the baseband processing unit, the RRU, or the AAU, and the channel between the base station and the network management device is automatically established based on the channel information, so that deployment costs and time required for deployment can be reduced.

In a possible implementation, the method further includes: after the establishing a channel between a base station and a network management device, obtaining deployment information; and performing a deployment operation based on the deployment information.

According to this solution, the deployment operation is automatically completed after the channel between the base station and the network management device is established, so that deployment costs and time required for deployment can be reduced.

In a possible implementation, the method further includes: sending a first request to the network management device, where the first request is used to obtain the deployment information; and receiving the deployment information from the network management device.

According to this solution, the deployment information may be automatically obtained by requesting from the network management device, so that deployment costs and time required for deployment can be reduced.

In a possible implementation, the method further includes: sending a second request to one or more of the baseband processing unit, the RRU, or the AAU, where the second request is used to obtain the deployment information; and receiving the deployment information from one or more of the baseband processing unit, the RRU, or the AAU.

According to this solution, the deployment information may be automatically obtained by requesting from one or more of the RRU or the AAU, so that deployment costs and time required for deployment can be reduced.

In a possible implementation, the deployment information includes one or more of the following information: software information, a configuration file, or a license file.

In a possible implementation, the method further includes: obtaining, from one or more of the baseband processing unit, the RRU, or the AAU, an identifier of a BBU corresponding to the channel information; obtaining an identifier of a BBU in the base station; and when the identifier of the BBU corresponding to the channel information is the same as the identifier of the BBU in the base station, establishing the channel between the base station and the network management device based on the channel information.

In a possible implementation, the method further includes: obtaining the identifier of the BBU in the base station from software and/or hardware of the BBU.

In a possible implementation, the BBU in the base station is a frame-shaped BBU or a box-shaped BBU.

In a possible implementation, the channel information includes one or more of the following information: an IP address of the BBU corresponding to the channel information, an identifier of a VLAN, or routing information. The routing information includes a next-hop route IP address of the BBU corresponding to the channel information and IP information of the network management device, and the IP information of the network management device includes an IP address of the network management device or an IP network segment of the network management device.

According to a second aspect, an embodiment of this application provides a communication method. The method may be performed by a base station, a BBU in a base station, a main control board in a base station, or a module (for example, a chip) in a base station. The method includes: obtaining channel information between a base station and a network management device; and sending the channel information to one or more of a baseband processing unit, an RRU, or an AAU, where the base station includes one or more of the baseband processing unit, the RRU, or the AAU.

According to this solution, the channel information is stored in one or more of the baseband processing unit, the RRU, or the AAU. In this way, when deployment needs to be performed subsequently, the channel information may be automatically obtained from one or more of the baseband processing unit, the RRU, or the AAU, and a deployment operation is completed, so that deployment costs and time required for the deployment can be reduced.

In a possible implementation, the method further includes: obtaining an identifier of a BBU corresponding to the channel information, where the base station includes the BBU; and sending, to one or more of the baseband processing unit, the RRU, or the AAU, the identifier of the BBU corresponding to the channel information.

In a possible implementation, the channel information includes one or more of the following information: an IP address of the BBU corresponding to the channel information, an identifier of a VLAN, or routing information. The routing information includes a next-hop route IP address of the BBU corresponding to the channel information and IP information of the network management device, and the IP information of the network management device includes an IP address of the network management device or an IP network segment of the network management device.

In a possible implementation, the BBU is a frame-shaped BBU or a box-shaped BBU.

According to a third aspect, an embodiment of this application provides a communication method. The method may be performed by a network management device or a module (for example, a chip) in a network management device. The method includes: receiving a first request from a first device, where the first request is used to obtain deployment information; and sending the deployment information to the first device, where the first device is a base station, a BBU, or a main control board.

According to a fourth aspect, an embodiment of this application provides a communication apparatus. The apparatus may be a base station, a BBU in a base station, a main control board in a base station, a module (for example, a chip) in a base station, a network management device, or a module (for example, a chip) in a network management device. The apparatus has a function of implementing the method in any implementation according to the first aspect to the third aspect. The function may be implemented by using hardware, or may be implemented by executing corresponding software by hardware. The hardware or the software includes one or more modules corresponding to the function.

According to a fifth aspect, an embodiment of this application provides a communication apparatus, including a module configured to perform the method in any implementation according to the first aspect to the third aspect.

According to a sixth aspect, an embodiment of this application provides a communication apparatus, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any implementation according to the first aspect to the third aspect by using a logic circuit or by executing code instructions.

According to a seventh aspect, an embodiment of this application provides a communication apparatus, including a processor coupled to a memory. The processor is configured to invoke a program stored in the memory, to perform the method in any implementation according to the first aspect to the third aspect. The memory may be located inside or outside the apparatus. In addition, there may be one or more processors.

According to an eighth aspect, an embodiment of this application provides a communication apparatus, including a processor and a memory. The memory is configured to store computer instructions. When the communication apparatus runs, the processor executes the computer instructions stored in the memory, so that the communication apparatus performs the method in any implementation according to the first aspect to the third aspect.

According to a ninth aspect, an embodiment of this application further provides a computer program product. The computer program product includes a computer program. When the computer program is run by a processor, the method in any implementation according to the first aspect to the third aspect is implemented.

According to a tenth aspect, an embodiment of this application further provides a computer-readable storage medium. The storage medium stores a computer program or instructions, and when the computer program or the instructions is/are executed by a processor, the method in any implementation according to the first aspect to the third aspect is implemented.

According to an eleventh aspect, an embodiment of this application further provides a communication system. The communication system includes a network management system and a communication apparatus that is configured to perform the method in any implementation according to the first aspect or the second aspect. The network management system is configured to establish a channel between the network management system and the communication apparatus.

### BRIEF DESCRIPTION OF DRAWINGS

FIG. 1 is a schematic diagram of a structure of a distributed base station according to an embodiment of this application;
FIG. 2 is a schematic diagram of frame-shaped BBU networking according to an embodiment of this application;
FIG. 3 is a schematic diagram of box-shaped BBU networking according to an embodiment of this application;
FIG. 4 is a schematic diagram of a communication method according to an embodiment of this application;
FIG. 5 is a schematic diagram of replacing a main control board according to an embodiment of this application;
FIG. 6 is a schematic diagram of another communication method according to an embodiment of this application;
FIG. 7 is a schematic diagram of a structure of a communication apparatus according to an embodiment of this application; and
FIG. 8 is a schematic diagram of a structure of a communication apparatus according to an embodiment of this application.

### DESCRIPTION OF EMBODIMENTS

In a distributed base station, a conventional macro base station device is divided, according to functions, into two functional units: a BBU and an RRU. The BBU mainly implements baseband processing (for example, channel encoding and decoding, modulation and demodulation) of a signal, providing transmission management and an interface, managing a wireless resource, providing a clock signal, and other functions. The RRU mainly implements intermediate frequency processing (for example, digital in-phase/quadrature (in-phase/quadrature, I/Q) modulation and demodulation, frequency up-/down-conversion, and digital-to-analog/analog-to-digital conversion), radio frequency processing, duplex, and the like for a signal.

An identifier of a BBU may be any identifier having a correspondence with the BBU, for example, an equipment serial number (equipment serial number, ESN). The identifier of the BBU may be allocated by a network management device, or may be generated by the BBU according to a preset rule. An identifier of an RRU may be any identifier having a correspondence with the RRU, for example, an ESN. The identifier of the RRU may be allocated by a network management device, or may be generated by the RRU according to a preset rule.

One BBU may support a plurality of RRUs. A BBU+RRU multi-channel solution can be used to greatly provide indoor coverage for a large venue. An optical fiber can be used for transmission between the BBU and the RRU. The RRU is connected to an antenna through a coaxial cable. To be specific, the optical fiber is used in a backbone, and the coaxial cable is used in a tributary.

To reduce a quantity of devices installed on a tower and a quantity of arranged jumpers, an active antenna unit (active antenna unit, AAU) is further designed. The AAU is a device integrating the RRU and the antenna, and therefore the AAU integrates functions of the BBU and the antenna. An optical fiber is also used for transmission between the BBU and the AAU.

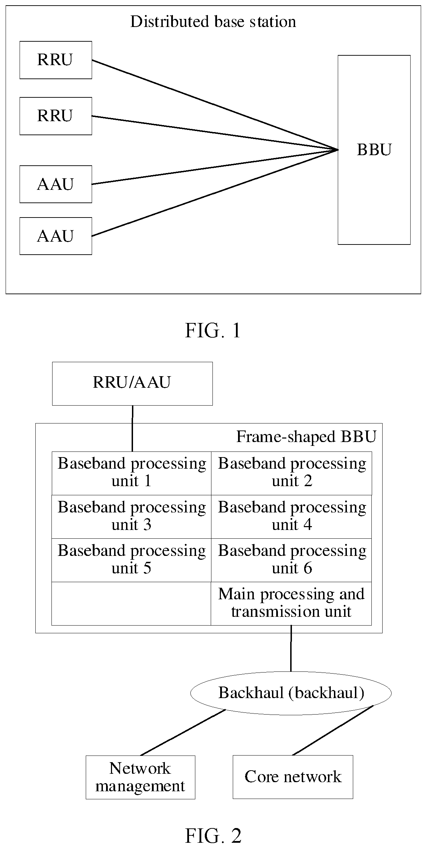

FIG. 1 is a schematic diagram of a structure of the distributed base station. One BBU may be connected to one or more RRUs (two RRUs are used as an example in the figure), and/or may be connected to one or more AAUs (two AAUs are used as an example in the figure).

It should be noted that, in embodiments of this application, the distributed base station may also be referred to as a base station for short.

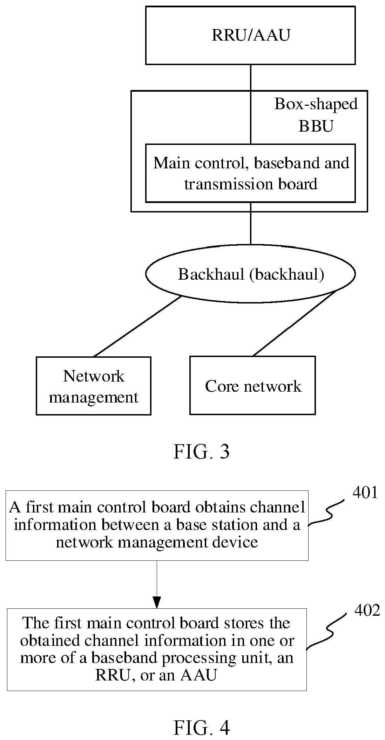

There are two types of BBUs: a frame-shaped BBU and a box-shaped BBU. FIG. 2 is a schematic diagram of frame-shaped BBU networking. The frame-shaped BBU mainly includes one or more main control and transmission boards and one or more baseband processing units. The RRU/AAU is connected to a baseband processing unit, and the BBU accesses a backhaul (backhaul) network through the main control and transmission board. FIG. 3 is a schematic diagram of box-shaped BBU networking. The entire box-shaped BBU is a box or board that provides main control, transmission, and baseband functions of the BBU. The box-shaped BBU may also be referred to as a main control, baseband and transmission board.

In embodiments of this application, the BBU described subsequently may be the frame-shaped BBU, or may be the box-shaped BBU. In embodiments of this application, the main control and transmission board and the main control, baseband and transmission board are collectively referred to as a main control board.

To reduce deployment costs and time required for deployment, an embodiment of this application provides a deployment method. In the method, a deployment operation may be automatically completed after a hardware installation engineer completes replacement of a main control board.

For ease of description, in this embodiment of this application, a main control board before replacement is referred to as a first main control board or an old main control board, and a main control board after replacement is referred to as a second main control board or a new main control board.

A channel needs to be established between a base station and a network management device. The network management device may perform software installation or update or file configuration on the base station through the channel. The network management device herein may be, for example, an operation, administration and maintenance (operation, administration and management, OAM) device. The channel between the base station and the network management device may be a channel between a BBU in the base station and the network management device, or a channel between an RRU in the base station and the network management device, or a channel between an AAU in the base station and the network management device, or a channel between a main control and transmission board in the base station and the network management device.

The following describes the deployment method provided in this embodiment of this application. It should be noted that the deployment method provided in this embodiment of this application may be performed by a base station, may be performed by a BBU in the base station, or may be performed by a main control board in the base station. For ease of description, the following provides descriptions by using an example in which the main control board performs the deployment method.

FIG. 4 is a schematic diagram of a communication method. The communication method mainly includes the following operations.

Operation 401: A first main control board obtains channel information between a base station and a network management device.

For example, after a channel between the base station and the network management device is successfully established, the first main control board obtains the channel information between the base station and the network management device from configuration data of a BBU.

The channel information indicates the channel between the base station and the network management device. The channel information includes one or more of the following information: an internet protocol (internet protocol, IP) address of the BBU, an identifier (VLAN ID) of a virtual local area network (virtual local area network, VLAN), or routing information.

The routing information includes a next-hop route IP address of the BBU and IP information of the network management device, and the IP information of the network management device includes an IP address of the network management device or an IP network segment of the network management device. As an example, the IP network segment of the network management device is 10.10.10.1/24, where /24 represents the first 24 bits of 10.10.10.0, namely, 10.10.10, and is a subnet identifier. Therefore, IP addresses indicated by 10.10.10.1/24 include 10.10.10.1 to 10.10.10.254. By configuring a route for a network segment instead of configuring a route for each IP address, a quantity of routes can be reduced. In this embodiment of this application, the next hop of the BBU may be understood as a next hop of the base station.

In an implementation, if the BBU serves as a client (client) and actively connects to the network management device, in other words, the BBU actively initiates a connection to the network management device, the channel information may include the IP information of the network management device.

In an implementation, if the network management device actively connects to the BBU, in other words, the network management device actively initiates a connection to the BBU, the channel information may not include the IP information of the network management device.

In an implementation, if the channel includes an internet protocol security (internet protocol security, IPsec) tunnel, the channel information may further include one or more of the following information: an IP address of a security gateway, a security algorithm, or an IP address of a certificate authority (Certificate Authority, CA).

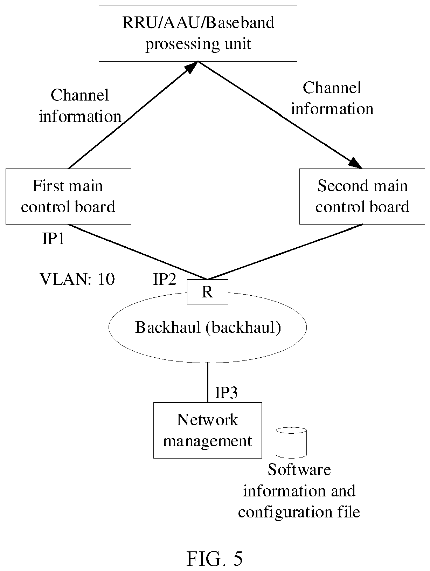

FIG. 5 is a schematic diagram of replacing the main control board. The channel information between the first main control board and the network management device includes:
IP address of the BBU: IP1;
VLAN ID: 10; and
routing information: the next-hop IP address of the BBU is IP2, and the IP address of the network management device is IP3.

Operation 402: The first main control board stores the obtained channel information in one or more of a baseband processing unit, an RRU, or an AAU.

In other words, the first main control board sends the channel information to one or more of the baseband processing unit, the RRU, or the AAU.

In an implementation, when the first main control board is a baseband transmission unit of the frame-shaped BBU, the first main control board may store the channel information in one baseband processing unit.

In an implementation, when the first main control board is a baseband transmission unit of the frame-shaped BBU, the first main control board may store the channel information in a plurality of baseband processing units, and the channel information stored in the plurality of baseband processing units is the same. In this implementation, a multi-backup mechanism is used to back up one piece of channel information for a plurality of times.

In an implementation, when the first main control board is a baseband transmission unit of the frame-shaped BBU, the first main control board may store the channel information in a plurality of baseband processing units, and the plurality of baseband processing units separately store some information in the channel information. In this implementation, one piece of channel information is stored in the plurality of baseband processing units in a distributed manner. This can reduce an amount of data that needs to be stored in each baseband processing unit, and does not increase storage pressure of each baseband processing unit.

In an implementation, the first main control board stores the channel information in one or more RRUs. For a specific implementation, refer to the implementation of storing the channel information in one or more baseband processing units. Details are not described again.

In an implementation, the first main control board stores the channel information in one or more AAUs. For a specific implementation, refer to the implementation of storing the channel information in one or more baseband processing units. Details are not described again.

In an implementation, the first main control board stores the channel information in one or more baseband processing units and one or more RRUs; or stores the channel information in one or more baseband processing units and one or more AAUs; or stores the channel information in one or more RRUs and one or more AAUs; or stores the channel information in one or more baseband processing units, one or more RRUs, and one or more AAUs. For a specific implementation, refer to the implementation of storing the channel information in one or more baseband processing units. Details are not described again.

Optionally, in the operation 402, the first main control board may further store, in one or more of the baseband processing unit, the RRU, or the AAU, an identifier of the BBU corresponding to the channel information. The channel information is associated with the BBU, to avoid incorrect use of the channel information.

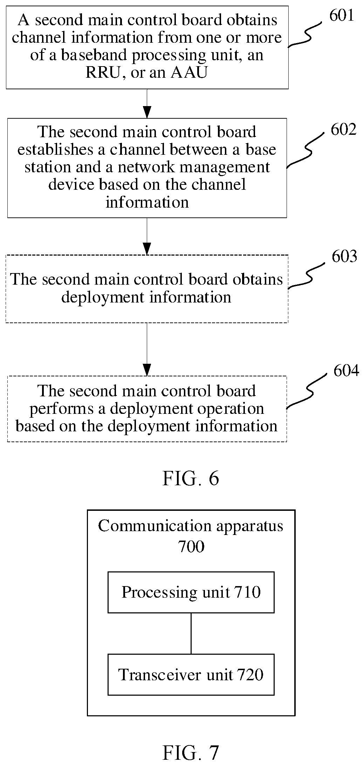

In an actual case, the main control board may need to be replaced. A hardware installation engineer carries a second main control board to an equipment room in which the BBU is located, first removes the first main control board, and then installs the second main control board. FIG. 6 is a schematic diagram of another communication method. The communication method mainly includes the following operations.

Operation 601: The second main control board obtains channel information from one or more of a baseband processing unit, an RRU, or an AAU.

After the second main control board is installed, the second main control board may be started by using onboard software in the second main control board. In this case, the second main control board is in a to-be-deployed state. Then, the second main control board establishes a communication connection to one or more of the baseband processing unit, the RRU, or the AAU. Therefore, the second main control board may obtain the channel information from one or more of the baseband processing unit, the RRU, or the AAU. The channel information is channel information stored by the first main control board.

Specifically, when the second main control board is a baseband transmission unit of the frame-shaped BBU, the second main control board may obtain the channel information from one or more of the baseband processing unit of the frame-shaped BBU, the RRU, or the AAU. When the second main control board is a box-shaped BBU, the second main control board may obtain the channel information from one or more of the RRU or the AAU.

Operation 602: The second main control board establishes a channel between a base station and a network management device based on the channel information.

Optionally, in the operation 601, the second main control board may further obtain, from one or more of the baseband processing unit, the RRU, or the AAU, an identifier of a BBU corresponding to the channel information, and therefore the second main control board may determine, based on the obtained identifier of the BBU, whether the obtained channel information can be used. For example, the second main control board determines whether the identifier of the BBU corresponding to the obtained channel information is the same as an identifier (an identifier of a BBU in the base station) of a BBU obtained from hardware of the BBU. If the identifiers are the same, it indicates that the channel information can be used; otherwise, the channel information cannot be used.

The frame-shaped BBU structure shown in FIG. 2 is used as an example. Before a main control and transmission board is replaced, the first main control board stores the channel information and the identifier of the BBU in a baseband processing unit 1 and a baseband processing unit 2. For example, the baseband processing unit 1 and the baseband processing unit 2 store same information, which is specifically: (channel information a, BBU ID-1). BBU ID-1 is an identifier of a BBU 1 in which the first main control board is located. Subsequently, the baseband processing unit 1 is replaced. For example, the hardware installation engineer removes the baseband processing unit 1, and installs a baseband processing unit (hereinafter referred to as a baseband processing unit 7) on a BBU 2 at a location at which the baseband processing unit 1 is located. In other words, the baseband processing unit 1 in FIG. 2 is replaced with the baseband processing unit 7. In addition, the baseband processing unit 7 stores channel information corresponding to the BBU 2 and an identifier of the BBU 2, which are specifically: (channel information b, BBU ID-2). Subsequently, after a first main control and transmission board is replaced with a second main control board, the second main control board obtains the channel information b and BBU ID-2 from the baseband processing unit 7, and obtains, from hardware of the BBU 1, that the identifier of the BBU 1 is BBU ID-1. The second main control board determines that the identifier of the BBU (BBU ID-2) obtained from the baseband processing unit 7 is different from the identifier of the BBU (BBU ID-1) obtained from software and/or the hardware of the BBU 1. In this case, it is determined that the channel information b obtained from the baseband processing unit 7 cannot be used. It may be understood that the obtained channel information b is not the channel information corresponding to the BBU in the base station. Therefore, the second main control board does not use the channel information b to establish a channel between the second main control board and the network management device. According to the method, channel establishment by using incorrect channel information can be avoided.

Subsequently, the second main control board may continue to obtain channel information and an identifier of a BBU from the baseband processing unit 2. Specifically, the channel information a and BBU ID-1 are obtained. Then, the second main control board determines that the identifier of the BBU (BBU ID-1) obtained from the baseband processing unit 2 is the same as the identifier of the BBU (BBU ID-1) obtained from the hardware of the BBU 1. In this case, it is determined that the channel information a obtained from the baseband processing unit 2 can be used. It may be understood that the obtained channel information a is the channel information corresponding to the BBU in the base station. Therefore, the second main control board uses the channel information a to establish a channel between the second main control board and the network management device.

Optionally, the following operation 603 and operation 604 are further included.

Operation 603: The second main control board obtains deployment information, where the deployment information includes one or more of the following information: software information, a configuration file, or a license (License) file.

In an implementation, the second main control board may obtain the deployment information from the network management device. For example, the second main control board sends a first request to the network management device to obtain the deployment information, and then the network management device sends the deployment information to the second main control board based on the first request.

In another implementation, if the deployment information is also stored by the first main control board in one or more of the baseband processing unit, the RRU, or the BBU, the second main control board may obtain the deployment information from one or more of the baseband processing unit, the RRU, or the AAU. For example, the second main control board sends a second request to one or more of the baseband processing unit, the RRU, or the AAU, to obtain the deployment information, and then one or more of the baseband processing unit, the RRU, or the AAU sends the deployment information to the second main control board based on the second request. Optionally, when the second main control board may obtain the deployment information from one or more of the baseband processing unit, the RRU, or the AAU, the operation 603 and the operation 601 may be completed in one operation, or may be completed in two different operations.

Operation 604: The second main control board performs a deployment operation based on the deployment information.

The second main control board may perform software installation or update based on the software information, perform parameter configuration based on the configuration file, and perform permission granting based on the license file.

The operation 601 to the operation 604 are performed, to implement an automatic deployment operation after the main control board is replaced, so that deployment costs and time required for the deployment can be reduced.

It should be noted that the channel information may be updated after the first main control board is replaced with the second main control board. In this way, the second main control board may alternatively obtain the channel information from configuration data of the BBU, and store the obtained channel information in one or more of the baseband processing unit, the RRU, or the AAU. A specific implementation process is similar to the operations 401 and 402, and details are not described again.

It may be understood that, to implement functions in the foregoing embodiments, the base station and a terminal include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular applications and design constraint conditions of the technical solutions.

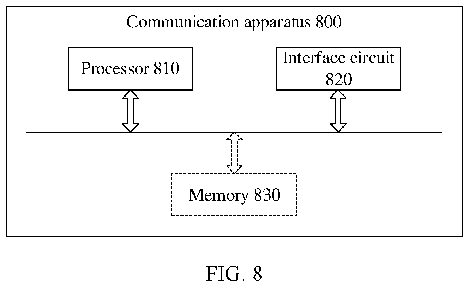

FIG. 7 and FIG. 8 are schematic diagrams of structures of possible communication apparatuses according to embodiments of this application. The communication apparatuses each may be configured to implement a function of a main control board, a BBU, or a base station in the foregoing method embodiments, and therefore can also achieve beneficial effects of the foregoing method embodiments. In embodiments of this application, the communication apparatus may be the distributed base station or the BBU shown in FIG. 1, the frame-shaped BBU or the main processing and transmission board in the frame-shaped BBU shown in FIG. 2, or the box-shaped BBU shown in FIG. 3.

As shown in FIG. 7, a communication apparatus 700 includes a processing unit 710 and a transceiver unit 720. The communication apparatus 700 is configured to implement a function of the first main control board or the second main control board in the method embodiment shown in FIG. 4 or FIG. 6.

When the communication apparatus 700 is configured to implement a function of the first main control board in the method embodiment shown in FIG. 4, the transceiver unit 720 is configured to obtain channel information from one or more of a baseband processing unit, an RRU, or an active antenna unit AAU; and the processing unit 710 is configured to establish a channel between a base station and a network management device based on the channel information. The base station includes one or more of the baseband processing unit, the RRU, or the AAU.

In a possible implementation, the processing unit 710 is further configured to: obtain deployment information after establishing the channel between the base station and the network management device; and perform a deployment operation based on the deployment information.

In a possible implementation, the processing unit 710 is specifically configured to: send a first request to the network management device by using the transceiver unit 720, where the first request is used to obtain the deployment information; and receive the deployment information from the network management device by using the transceiver unit 720.

In a possible implementation, the processing unit 710 is specifically configured to: send a second request to one or more of the baseband processing unit, the RRU, or the AAU by using the transceiver unit 720, where the second request is used to obtain the deployment information; and receive the deployment information from one or more of the baseband processing unit, the RRU, or the AAU by using the transceiver unit 720.

In a possible implementation, the deployment information includes one or more of the following information: software information, a configuration file, or a license file.

In a possible implementation, the transceiver unit 720 is further configured to obtain, from one or more of the baseband processing unit, the RRU, or the AAU, an identifier of a base band unit BBU corresponding to the channel information. The processing unit 710 is configured to: obtain an identifier of a BBU in the base station; and when the identifier of the BBU corresponding to the channel information is the same as the identifier of the BBU in the base station, establish the channel between the base station and the network management device based on the channel information.

In a possible implementation, the processing unit 710 is specifically configured to obtain the identifier of the BBU in the base station from software and/or hardware of the BBU.

In a possible implementation, the BBU in the base station is a frame-shaped BBU or a box-shaped BBU.

In a possible implementation, the channel information includes one or more of the following information: an IP address of the BBU corresponding to the channel information, an identifier of a VLAN, or routing information. The routing information includes a next-hop route IP address of the BBU corresponding to the channel information and IP information of the network management device, and the IP information of the network management device includes an IP address of the network management device or an IP network segment of the network management device.

When the communication apparatus 700 is configured to implement a function of the second main control board in the method embodiment shown in FIG. 6, the processing unit 710 is configured to obtain channel information between a base station and a network management device; and the transceiver unit 720 is configured to send the channel information to one or more of a baseband processing unit, an RRU, or an AAU. The base station includes one or more of the baseband processing unit, the RRU, or the AAU.

In a possible implementation, the processing unit 710 is further configured to obtain an identifier of a BBU corresponding to the channel information, where the base station includes the BBU. The transceiver unit 720 is further configured to send, to one or more of the baseband processing unit, the RRU, or the AAU, the identifier of the BBU corresponding to the channel information.

In a possible implementation, the channel information includes one or more of the following information: an IP address of the BBU corresponding to the channel information, an identifier of a VLAN, or routing information. The routing information includes a next-hop route IP address of the BBU corresponding to the channel information and IP information of the network management device, and the IP information of the network management device includes an IP address of the network management device or an IP network segment of the network management device.

In a possible implementation, the BBU is a frame-shaped BBU or a box-shaped BBU.

For more detailed descriptions of the processing unit 710 and the transceiver unit 720, directly refer to related descriptions in the method embodiment shown in FIG. 4 or FIG. 6. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data required for running instructions by the processor 810, or store data generated after the processor 810 runs instructions.

When the communication apparatus 800 is configured to implement the method shown in FIG. 4 or FIG. 6, the processor 810 is configured to implement a function of the processing unit 710, and the interface circuit 820 is configured to implement a function of the transceiver unit 720.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

In an embodiment, a BBU is configured to: obtain channel information from one or more of an RRU or an AAU; and establish a channel between a base station and a network management device based on the channel information. The base station includes the BBU and one or more of the RRU or the AAU.

In a possible implementation, the BBU is further configured to: obtain deployment information after establishing the channel between the base station and the network management device; and perform a deployment operation based on the deployment information.

In a possible implementation, the BBU is specifically configured to: send a first request to the network management device, where the first request is used to obtain the deployment information; and receive the deployment information from the network management device.

In a possible implementation, the BBU is specifically configured to: send a second request to one or more of the RRU or the AAU, where the second request is used to obtain the deployment information; and receive the deployment information from one or more of the RRU or the AAU.

In a possible implementation, the BBU is further configured to: obtain, from one or more of the RRU or the AAU, an identifier of a BBU corresponding to the channel information; obtain an identifier of the BBU in the base station; and when the identifier of the BBU corresponding to the channel information is the same as the identifier of the BBU in the base station, establish the channel between the base station and the network management device based on the channel information.

In an embodiment, a BBU is configured to: obtain channel information between a base station and a network management device; and send the channel information to one or more of an RRU or an AAU. The base station includes the BBU and one or more of the RRU or the AAU.

In a possible implementation, the BBU is further configured to: obtain an identifier of the base station; and send the identifier of the base station to one or more of the RRU or the AAU. The identifier of the base station may be, for example, global positioning system (global positioning system, GPS) location information.

In an embodiment, a BBU is configured to: obtain channel information from one or more of a baseband processing unit, an RRU, or an AAU; and establish a channel between a base station and a network management device based on the channel information. The base station includes the BBU and one or more of the RRU or the AAU.

In a possible implementation, the BBU is further configured to: obtain deployment information after establishing the channel between the base station and the network management device; and perform a deployment operation based on the deployment information.

In a possible implementation, the BBU is specifically configured to: send a first request to the network management device, where the first request is used to obtain the deployment information; and receive the deployment information from the network management device.

In a possible implementation, the BBU is specifically configured to: send a second request to one or more of the baseband processing unit, the RRU, or the AAU, where the second request is used to obtain the deployment information; and receive the deployment information from one or more of the baseband processing unit, the RRU, or the AAU.

In a possible implementation, the BBU is further configured to: obtain, from one or more of the baseband processing unit, the RRU, or the AAU, an identifier of a BBU corresponding to the channel information; obtain an identifier of the BBU in the base station; and when the identifier of the BBU corresponding to the channel information is the same as the identifier of the BBU in the base station, establish the channel between the base station and the network management device based on the channel information.

In an embodiment, a BBU is configured to: obtain channel information between a base station and a network management device; and send the channel information to one or more of a baseband processing unit, an RRU, or an AAU. The base station includes the BBU and one or more of the RRU or the AAU.

In a possible implementation, the BBU is further configured to: obtain an identifier of the BBU; and send the identifier of the BBU to one or more of the baseband processing unit, the RRU, or the AAU.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art. For example, a storage medium is coupled to a processor, so that the processor can read information from the storage medium and write the information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a base station, user equipment, or another programmable apparatus. The computer programs or instructions may be stored in a computer-readable storage medium or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or an optical medium, for example, a digital video disc; or a semiconductor medium, for example, a solid state drive. The computer-readable storage medium may be a volatile storage medium or a non-volatile storage medium, or may include a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" is an association relationship for describing associated objects, and indicates that three relationships may exist. For example, A and/or B may represent the following three cases: Only A exists, both A and B exist, and only B exists, where A and B may indicate a singular or plural form. In text descriptions of this application, the character "/" usually indicates an "or" relationship between the associated objects. In a formula of this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined according to functions and an internal logic of the processes.

## Claims

1. A communication method, comprising:
obtaining channel information from one or more of a baseband processing unit, a remote radio unit RRU, or an active antenna unit AAU; and
establishing a channel between a base station and a network management device based on the channel information, wherein the base station comprises one or more of the baseband processing unit, the RRU, or the AAU.

2. The method according to claim 1, wherein after the establishing a channel between a base station and a network management device, the method further comprises:
obtaining deployment information; and
performing a deployment operation based on the deployment information.

3. The method according to claim 2, wherein the obtaining deployment information comprises:
sending a first request to the network management device, wherein the first request is used to obtain the deployment information; and
receiving the deployment information from the network management device.

4. The method according to claim 2, wherein the obtaining deployment information comprises:
sending a second request to one or more of the baseband processing unit, the RRU, or the AAU, wherein the second request is used to obtain the deployment information; and
receiving the deployment information from one or more of the baseband processing unit, the RRU, or the AAU.

5. The method according to any one of claims 2 to 4, wherein the deployment information comprises one or more of the following information: software information, a configuration file, or a license file.

6. The method according to any one of claims 1 to 5, further comprising:
obtaining, from one or more of the baseband processing unit, the RRU, or the AAU, an identifier of a base band unit BBU corresponding to the channel information; and obtaining an identifier of a BBU in the base station; wherein
the establishing a channel between a base station and a network management device based on the channel information comprises:
when the identifier of the BBU corresponding to the channel information is the same as the identifier of the BBU in the base station, establishing the channel between the base station and the network management device based on the channel information.

7. The method according to claim 6, wherein the obtaining an identifier of a BBU in the base station comprises:
obtaining the identifier of the BBU in the base station from software and/or hardware of the BBU.

8. The method according to claim 6 or 7, wherein the BBU in the base station is a frame-shaped BBU or a box-shaped BBU.

9. The method according to any one of claims 1 to 8, wherein the channel information comprises one or more of the following information: an internet protocol IP address of the BBU corresponding to the channel information, an identifier of a virtual local area network VLAN, or routing information, wherein
the routing information comprises a next-hop route IP address of the BBU corresponding to the channel information and IP information of the network management device, and the IP information of the network management device comprises an IP address of the network management device or an IP network segment of the network management device.

10. A communication method, comprising:
obtaining channel information between a base station and a network management device; and
sending the channel information to one or more of a baseband processing unit, a remote radio unit RRU, or an active antenna unit AAU, wherein the base station comprises one or more of the baseband processing unit, the RRU, or the AAU.

11. The method according to claim 10, further comprising:
obtaining an identifier of a BBU corresponding to the channel information, wherein the base station comprises the BBU; and
sending, to one or more of the baseband processing unit, the RRU, or the AAU, the identifier of the BBU corresponding to the channel information.

12. The method according to claim 10 or 11, wherein the channel information comprises one or more of the following information: an internet protocol IP address of the BBU corresponding to the channel information, an identifier of a virtual local area network VLAN, or routing information, wherein
the routing information comprises a next-hop route IP address of the BBU corresponding to the channel information and IP information of the network management device, and the IP information of the network management device comprises an IP address of the network management device or an IP network segment of the network management device.

13. The method according to claim 11 or 12, wherein the BBU is a frame-shaped BBU or a box-shaped BBU.

14. A base station, comprising: a base band unit BBU, and a remote radio unit RRU and/or an active antenna unit AAU, wherein
the BBU is configured to: obtain channel information from one or more of the RRU or the AAU; and establish a channel between the base station and a network management device based on the channel information.

15. The base station according to claim 14, wherein the BBU is further configured to: obtain deployment information after establishing the channel between the base station and the network management device; and perform a deployment operation based on the deployment information.

16. The base station according to claim 15, wherein the BBU is specifically configured to: send a first request to the network management device, wherein the first request is used to obtain the deployment information; and receive the deployment information from the network management device.

17. The base station according to claim 15, wherein the BBU is specifically configured to: send a second request to one or more of the RRU or the AAU, wherein the second request is used to obtain the deployment information; and receive the deployment information from one or more of the RRU or the AAU.

18. The base station according to any one of claims 15 to 17, wherein the deployment information comprises one or more of the following information: software information, a configuration file, or a license file.

19. The base station according to any one of claims 14 to 18, wherein the BBU is further configured to: obtain, from one or more of the RRU or the AAU, an identifier of a BBU corresponding to the channel information; obtain an identifier of the BBU in the base station; and when the identifier of the BBU corresponding to the channel information is the same as the identifier of the BBU in the base station, establish the channel between the base station and the network management device based on the channel information.

20. The base station according to claim 19, wherein the BBU is specifically configured to obtain the identifier of the BBU in the base station from software and/or hardware of the BBU.

21. The base station according to any one of claims 14 to 20, wherein the BBU in the base station is a frame-shaped BBU or a box-shaped BBU.

22. The base station according to any one of claims 14 to 21, wherein the channel information comprises one or more of the following information: an internet protocol IP address of the BBU corresponding to the channel information, an identifier of a virtual local area network VLAN, or routing information, wherein
the routing information comprises a next-hop route IP address of the BBU corresponding to the channel information and IP information of the network management device, and the IP information of the network management device comprises an IP address of the network management device or an IP network segment of the network management device.

23. A base station, comprising: a base band unit BBU, and a remote radio unit RRU and/or an active antenna unit AAU, wherein
the BBU is configured to: obtain channel information between the base station and a network management device; and send the channel information to one or more of the RRU or the AAU.

24. The base station according to claim 23, wherein the BBU is further configured to: obtain an identifier of the BBU; and
send the identifier of the BBU to one or more of the RRU or the AAU.

25. The base station according to claim 23 or 24, wherein the channel information comprises one or more of the following information: an internet protocol IP address of the BBU, an identifier of a virtual local area network VLAN, or routing information, wherein
the routing information comprises a next-hop route IP address of the BBU and IP information of the network management device, and the IP information of the network management device comprises an IP address of the network management device or an IP network segment of the network management device.

26. The base station according to claim 24 or 25, wherein the BBU is a frame-shaped BBU or a box-shaped BBU.

27. A communication apparatus, comprising:
an obtaining unit, configured to obtain channel information from one or more of a baseband processing unit, a remote radio unit RRU, or an active antenna unit AAU; and
a processing unit, configured to establish a channel between a base station and a network management device based on the channel information, wherein the base station comprises one or more of the baseband processing unit, the RRU, or the AAU.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor implements the method according to any one of claims 1 to 13 by using a logic circuit or by executing code instructions.

29. A computer program product, comprising a computer program, and when the computer program is executed by a processor, the method according to any one of claims 1 to 13 is implemented.

30. A computer-readable storage medium, wherein the storage medium stores a computer program or instructions, and when the computer program or the instructions is/are executed by a processor, the method according to any one of claims 1 to 13 is implemented.
